# EUROPÄISCHE PATENTSCHRIFT

(11) **EP 0 845 347 B1**
(45) Veröffentlichungstag und Bekanntmachung des Hinweises auf die Patenterteilung: **26.06.2002**
(21) Anmeldenummer: 97119581.3
(22) Anmeldetag: 08.11.1997
(51) Int. Cl.: B29C 70/84, B29C 65/70, B29C 65/48

(54) **Verfahren zur Herstellung einer Verbindung eines Bauteils mit einer Glasscheibe**
Process for joining a structural element with a pane of glass
Procédé pour relier un élément de construction à une vitrage

(30) Priorität: 29.11.1996 DE 19649617
(43) Veröffentlichungstag der Anmeldung: 03.06.1998
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, D-31515 Wunstorf (DE)
(74) Vertreter: Jabbusch, Wolfgang, Dr.Jur. Jabbusch, Wehser & Lauerwald Patentanwälte

(56) Entgegenhaltungen:
- EP-A- 0 014 247
- EP-A- 0 158 046
- EP-A- 0 368 817
- EP-A- 0 620 134
- EP-A- 0 633 128
- EP-A- 0 679 546
- EP-A- 0 707 993
- EP-A- 0 729 857
- DE-A- 1 604 736
- DE-A- 3 341 926
- DE-A- 3 742 719
- DE-A- 4 108 219
- DE-A- 4 326 013
- FR-A- 2 157 189
- FR-A- 2 627 555
- GB-A- 2 245 300
- US-A- 5 073 324

## Beschreibung

Die Erfindung betrifft ein Verfahren zum Herstellen einer Verbindung zwischen einer in eine Fahrzeugkarosserie einsetzbaren Glasscheibe und einem weiteren wenigstens ein Halteorgan aufweisenden Bauteil.

Übliche Verfahren zur Verbindung von Teilen umfassen zum einen die Gruppe der lösbaren Verbindungen und zum anderen die Gruppe der unlösbaren Verbindungen. Dabei ist eigentlich auch eine unlösbare Verbindung von Teilen zwar grundsätzlich wenn auch mit erheblichen Aufwand lösbar, führt jedoch, zum Beispiel bei einer Schweißverbindung oder Nietverbindung, zur völligen Zerstörung der Verbindungselemente und zumeist auch zu einer mechanischen Beschädigung der Verbindungsbereiche der verbunden gewesenen Teile.

Zur Gruppe der unlösbaren Verbindungen der vorbeschriebenen Gattung gehört auch das nach der DE - 374 2 719 A1 bekannte Verfahren zur Herstellung einer eine Glasscheibe und eine Dichtung umfassenden Baugruppe für Fahrzeugdächer.

Bei dem dort beschriebenen Verfahren werden eine Glasscheibe und eine Dichtung, die das damit zu verbindende Bauteil bildet, gemeinsam in eine zwangsverschließbare Form eingelegt. Anschließend wird die in der geschlossenen Form vorhandene Kavität durch Einspritzen einer Elastomermasse gefüllt, wodurch eine Dauerverbindung zwischen der Glasscheibe und dem als Dichtung vorliegenden Bauteil hergestellt ist.

Nach dem Öffnen der Form läßt sich die so hergestellte Baugruppe aus der Form entnehmen und als Einheit dem Einbau in die Karosserie eines Fahrzeuges zuführen.

Lösbare Verbindungen, zumeist Schraubverbindungen, Klemmverbindungen oder dergleichen, sind dagegen sowohl in der Herstellung und Montage als auch insbesondere bei der Demontage, wenn es gilt, die Verbindungsmittel zu lösen, arbeitsaufwendig und damit kostenintensiv.

Der Erfindung liegt die Aufgabe zugrunde, eine Verbindung kostengünstig herzustellen, die mit geringem Arbeitsaufwand wieder lösbar ist.

Diese Aufgabe ist erfindungsgemäß durch die Merkmale des unabbhängigen Anspruchs 1 gelöst. Vorteilhafte Weiterbildungen der Erfindung ergeben sich aus den abhängigen Unteransprüchen 2 bis 10.

Es ist eine Besonderheit des hier angegebenen Verfahrens, daß das Bauteil mit der Glasscheibe nicht direkt verbunden wird, sondern vielmehr indirekt über den Zwischenhalter, wobei der Zwischenhalter in erfindungswesentlicher Weise an Ort und Stelle, das heißt im Verbindungsbereich, durch Gießen der flüssigen aushärtenden Vergußmasse ausgeformt wird.

Dabei kann so vorgegangen werden, daß das Bauteil an die Glasscheibe in der vorbestimmten Position gesetzt wird und daß es dann anschließend, bei der Ausformung des Zwischenhalters aus Vergußmasse, an der Formgebung der Vergußmasse zum Zwischenhalter beteiligt wird. Zur Ausformung des Zwischenhalters aus Vergußmasse können auch vorgefertigte Formteile verwendet werden, die zum Beispiel zusammen mit entsprechenden Flächen des Bauteils die Ausformung des Zwischenhalters besorgen.

Der aus Vergußmasse an Ort und Stelle, nämlich im Verbindungsbereich ausgeformte Zwischenhalter, ist mit der Glasscheibe verklebt, da die noch mehr oder weniger flüssige Vergußmasse in den Kleber-Auftrag gesetzt wird. Mit dem Bauteil kann der angeformte und ausgehärtete Zwischenhalter jedoch in eine haltende Wirkverbindung gebracht werden, so daß letztlich das Bauteil mit der Glasscheibe leicht und einfach verbindbar ist.

Bauteil und Glasscheibe könnten aus unterschiedlichsten Materialien, wie zum Beispiel Metall, Glas, Holz, Kunststoff oder Elastomer bestehen. Das erfindungsgemäße Verfahren hat somit auch den Vorteil, unterschiedlichste Werkstoffe miteinander problemlos verbinden zu können.

Als Vergußmasse ist zum Beispiel ein Zweikomponentenpolyurethan verwendbar, so daß der daraus geformte Zwischenhalter chemisch aushärtet. Es sind jedoch auch andere aushärtende Materialien einsetzbar, zum Beispiel auch solche, die durch thermische Behandlung aushärten.

Eine haltende Wirkverbindung zwischen dem Bauteil und dem aus der Vergußmasse gebildeten Zwischenhalter wird erfindungsgemäß dadurch erreicht, daß ein oder mehrere Halteorgane des Bauteils eine Ausgestaltung erhalten, 'die ihre Verklammerung, Verrastung oder dergleichen mit dem Zwischenhalter ermöglichen. Es könnten zum Beispiel als Halteorgan nutzbare Hohlräume im Bauteil beim Angießen zwecks Ausformung des Zwischenhalters mit der flüssigen Vergußmasse gefüllt werden, so daß sich der Zwischenhalter nach seinem Aushärten mit dem Bauteil verklammert hat. Ebenso lassen sich am Bauteil befindliche Vorsprünge, Leisten, Nasen, Rippen und dergleichen mit Vergußmassen umgießen, so daß derartige Halteorgane im ausgehärteten Zwischenhalter aufgenommen und somit ebenfalls verklammert sind. Da der fertige, seine Funktion entfaltende Zwischenhalter mit der Glasscheibe verklebt ist, sind schließlich Bauteil und Glasscheibe über den angeformten Zwischenhalter fest miteinander verbunden. Zwischen Bauteil und Zwischenhalter besteht dabei eine mechanische Verbindung, die sich ggf., bei entsprechender Geometrie der Halteorgane, auch relativ leicht wieder lösen läßt, nämlich dann, wenn sich entweder Angußzapfen des Zwischenhalters aus Hohlräumen im Bauteil leicht herausziehen lassen oder umgossene Vorsprünge, Füße, Rippen und dergleichen Halteorgane des Bauteils aus dem Zwischenhalter gezogen werden.

Die an der Ausformung der Vergußmasse zum Zwischenhalter beteiligten Flächen des Bauteils können bei auftretender Adhäsionsneigung der für Bauteil und Vergußmasse verwendeten Werkstoffe vor dem Anguß der Vergußmasse mit einem Trennmittel beschichtet werden. Dadurch wird ein späteres Lösen der Verbindung erleichtert, das heißt Bauteil und Glasscheibe sind wieder voneinander ohne besonderen Aufwand trennbar.

Das erfindungsgemäße Verfahren ermöglicht mit besonderem Vorteil die alternativen Ausgestaltungen für haltende Wirkverbindungen, daß entweder nach dem Ausformen durch Angießen der Vergußmasse die Verbindung zwischen Bauteil und Glasscheibe fertiggestellt ist, oder daß am Zwischenhalter entsprechende Ausgestaltungen gebildet werden, die ein leichtes Zusammenfügen von Bauteil und Glasscheibe ermöglichen, indem der ausgeformte und ausgehärtete Zwischenhalter, der an der Glasscheibe fest verklebt sitzt, mit den Halteorganen am Bauteil in haltende Wirkverbindung gebracht wird. Beispielsweise können Rastnasen als Halteorgane in entsprechende formgebungsmäßig dazu passende Taschen oder dergleichen Aufnahmen oder Durchbrechungen des Zwischenhalters eingerastet werden.

Für eine haltende Wirkverbindung zwischen dem Bauteil und dem Zwischenhalter sind grundsätzlich diverse einen Formschluß bewirkende, korrespondierende Gestaltungen verwendbar.

Für die Vergußmasse ist ein. nach der Aushärtung hinsichtlich seiner Härte und Elastizität zu den entsprechenden Eigenschaften des jeweiligen Bauteils konträrer Werkstoff besonders vorteilhaft. Besteht das Bauteil zum Beispiel aus einem harten Material, wie Metall oder dergleichen, ist es vorteilhaft, für die Vergußmasse ein auch nach der Aushärtung noch elastisch bleibendes Material zu wählen. Die Bauteile, bzw. deren Halteorgane, können dann aus dem ausgehärteten Zwischenhalter gezogen werden, da sich das elastische Material des Zwischenhalters verformen kann. Andererseits ist es dann vorteilhaft, eine härtere Vergußmasse einzusetzen, wenn das Bauteil aus einem weichen Material, zum Beispiel einem Elastomer besteht. Bei einer Trennung zwischen Bauteil und Glasscheibe verformt sich dann das Halteorgan des gegenüber dem Zwischenhalter weicheren Bauteils. Es ist auch möglich, daß das Bauteil und seine Halteorgane getrennt voneinander gefertigt werden, anschließend zusammengesetzt und danach über den Zwischenhalter mit der Glasscheibe verbindbar sind, indem entweder die Halteorgane mit der Vergußmasse beim Anformen des Zwischenhalters umgossen werden oder im Zwischenhalter entsprechende Formungen vorgenommen werden, die mit Halteorganen in entsprechende Verbindung bringbar sind, zum Beispiel eine verrastende Formschlußverbindung.

Daraus ergibt sich der Vorteil, daß für das Bauteil und für die Halteorgane unterschiedliche Werkstoffe verwendbar sind, was bei bestimmten Anwendungsfällen der erfindungsgemäßen Verbindung vorteilhaft sein kann. So sind zum Beispiel Anwendungen von Bauteilen im dichtungstechnischen Bereich denkbar, die zwar ein relativ weiches Elastomerteil als Dichtlippe erfordert, daß dann aber härtere Halteorgane benötigt, die wiederum mit den entsprechenden Zwischenhaltern mit entsprechenden Formschlußelementen verrastet werden könnten. Selbstverständlich ist es auch möglich, unterschiedliche Werkstoffe für Bauteil und Halteorgane in einem gemeinsamen Arbeitsgang zu verarbeiten. Ein hartelastisches Bauteil kann zum Beispiel während der gemeinsamen Extrudierung weichelastische Halteorgane erhalten. Es ist also ohne weiteres möglich., das Bauteil mit seinen Halteorganen so herzustellen, daß es Abschnitte beziehungsweise Bereiche aufweist, in denen andere Werkstoffeigenschaften als in den umgehenden beziehungsweise benachbarten Bereichen vorherrschen.

Ausführungsbeispiele des erfindungsgemäßen Verfahrens, insbesondere verschiedener Anwendungsmöglichkeiten der erfindungsgemäßen Verbindungstechnik, sind in der Zeichnung dargestellt. Es zeigen:
- Fig. 1: eine schematische Seitenansicht einer Ausführungsmöglichkeit eines Verbindungsbereichs zwischen einem Bauteil und einer Glasscheibe im Schnitt,
- Fig. 2: eine Ansicht des Verbindungsbereiches im Schnitt entlang der Linie II-II in Fig. 1,
- Fig. 3: die durch Einkreisung in Fig. 2 gekennzeichnete Einzelheit X im Zustand des Lösens der Verbindung bei nach der Aushärtung noch elastisch bleibender Vergußmasse für den Zwischenhalter und hartem Werkstoff für zumindest das Halteorgan des Bauteils,
- Fig. 4: die Einzelheit X im Zustand des Lösens der Verbindung bei harter Vergußmasse für den Zwischenhalter und einem weichelastischen Werkstoff für zumindest das Halteorgan des Bauteils,
- Fig. 5 - Fig. 9: Schnittansichten unterschiedlicher Ausführungen von Formgebungen der Halteorgane der Bauteile,
- Fig. 10: eine schematische Schnittansicht einer Anwendung der Verbindung entsprechend Fig. 1, bei der das Bauteil aus einem Elastomermaterial mit angeformter Dichtlippe besteht,
- Fig. 11: eine schematische Ansicht der Anwendung der Verbindung bei der Ausbildung eines Gelenkes zwischen zwei Glasscheiben,
- Fig. 12: eine schematische Schnittansicht eines Verbindungsbereiches entsprechend Fig. 1, wobei zur Ausformung des Zwischenhalters zusätzlich ein vorgefertigtes Formteil verwendet wird,
- Fig. 13: eine schematische Schnittansicht einer Anwendung einer Verbindung einer Automobil-Glasscheibe mit einem Bauteil mit Dichtlippe entsprechend Fig. 10, wobei die Glasscheibe mit einem Einbaukleber an einem eine Automobil-Karosserie andeutenden Karosserieflansch befestigt ist,
- Fig. 14: eine Ansicht im Schnitt entlang der Linie XIV-XIV in Fig. 13,
- Fig. 15: die Schnittansicht einer Verbindung zwischen einer Auto-Glasscheibe und einem als Blende ausgebildeten Bauteil, das mit vor die Glasscheibenkante geklebtem Zwischenhalter an der Glasscheibe gehalten ist, wobei die Glasscheibe mittels einem Einbaukleber an einem Karosserieflansch befestigt ist,
- Fig. 16: eine schematische Schnittansicht entlang der Linie XVI-XVI in Fig. 15,
- Fig. 17: ein Anwendungsbeispiel der Verbindung, bei der das Bauteil und sein Halteorgan aus unterschiedlichen Werkstoffen bestehen und die Auto-Glasscheibe mittels direkt auf den Zwischenhalter aufgetragenem Einbaukleber mit einem Karosserieflansch verbunden ist,
- Fig. 18: eine schematische Schnittansicht des Verbindungsbereiches einer Glasscheibe mit angeformtem Zwischenhalter, der für eine haltende Wirkverbindung mit Halteorganen eines Bauteils Gestaltungen erhalten hat, die einen Formschluß bewirken,
- Fig. 19: eine schematische Ansicht des Zwischenhalters in Richtung des Pfeils IXX in Fig. 18 gesehen,
- Fig. 20: eine schematische Seitenansicht eines Bauteils, dessen Halteorgan aus einem anderen Werkstoff besteht, im Schnitt,
- Fig. 21: eine Schnittansicht eines Anwendungsbeispieles gemäß den Fig. 18 - 20, bei dem die Glasscheibe, etwa Fig. 13 entsprechend, mit Einbaukleber an einem Karosserieflansch befestigt ist,
- Fig. 22: eine Schnittansicht eines Verbindungsbereiches mit einem an die Kante einer Glasscheibe angeformten Zwischenhalter, der für eine haltende Wirkverbindung mit Halteorganen eines Bauteils einen Formschluß ermöglichende Gestaltungen erhalten hat,
- Fig. 23: eine Ansicht des Zwischenhalters in Richtung des Pfeils XXIII in Fig. 22 gesehen,
- Fig. 24: ein Anwendungsbeispiel entsprechend Fig. 22 bzw. Fig. 23 mit einem Bauteil mit Halteorganen, die mit dem angeformten Zwischenhalter formschlüssig verrastet sind, wobei die Glasscheibe mittels Einbaukleber in eine durch einen Karosserieflansch angedeutete Karosserie eingebaut ist,
- Fig. 25: eine Ausformung eines Zwischenhalters entsprechend Fig. 18 mit Hilfe zusätzlicher, abnehmbarer und mehrfach wiederverwendbarer Formteile und
- Fig. 26: eine Ausformung eines Zwischenhalters an der Kante einer Glasscheibe entsprechend Fig. 22 mit Hilfe zusätzlicher, abnehmbarer und mehrfach wiederverwendbarer Formteile.

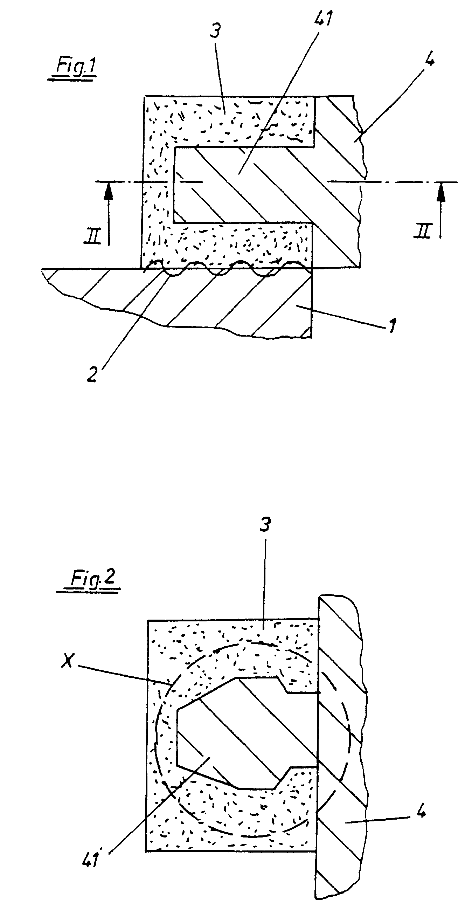

In Fig. 1 ist eine schematische Seitenansicht eines Verbindungsbereichs eines Bauteils 4 mit einer Glasscheibe 1 im Schnitt dargestellt. Auf die im Verbindungsbereich befindliche Fläche der Glasscheibe 1 ist Kleber 2 aufgetragen.

Das Bauteil 4 weist ein Halteorgan 41 auf, das hier als vorstehender Zapfen ausgebildet ist. In den Auftrag aus Kleber 2 ist aushärtende Vergußmasse gesetzt, aus der wenigstens ein Zwischenhalter 3 ausgeformt ist, der mit mindestens einem der Halteorgane 41 des Bauteils 4 in haltende Wirkverbindung bringbar ist. Bei diesem Ausführungsbeispiel ist das Halteorgan 41 von der aushärtenden Vergußmasse zunächst umgossen und ist das Halteorgan 41, nach Aushärten der Vergußmasse, im daraus geformten Zwischenhalter aufgenommen.

Fig. 2 zeigt eine Ansicht des Verbindungsbereichs im Schnitt entlang der Linie II-II in Fig. 1. Gleiche Teile sind mit gleichen Bezugszahlen bezeichnet. Fig. 2 läßt erkennen, daß das Halteorgan 41 durch seinen verdickten Kopf eine Formschlußverbindung mit dem Zwischenhalter 3 aus Vergußmasse eingeht.

Je nach Anforderungen kann das Vergußmaterial, aus dem der Zwischenhalter ausgeformt wird, weich und elastisch oder hart und unelastisch gewählt werden. Besteht das Bauteil 4 zum Beispiel aus einem harten Material, wie Metall oder dergleichen, ist es vorteilhaft, für die Vergußmasse und damit auch für den Zwischenhalter, ein elastisches Material zu wählen. Das Bauteil 4 kann dann, wenn die Verbindung wieder gelöst werden soll, einfach von dem Zwischenhalter abgezogen werden, da sich das elastische Material des Zwischenhalters entsprechend verformen kann.

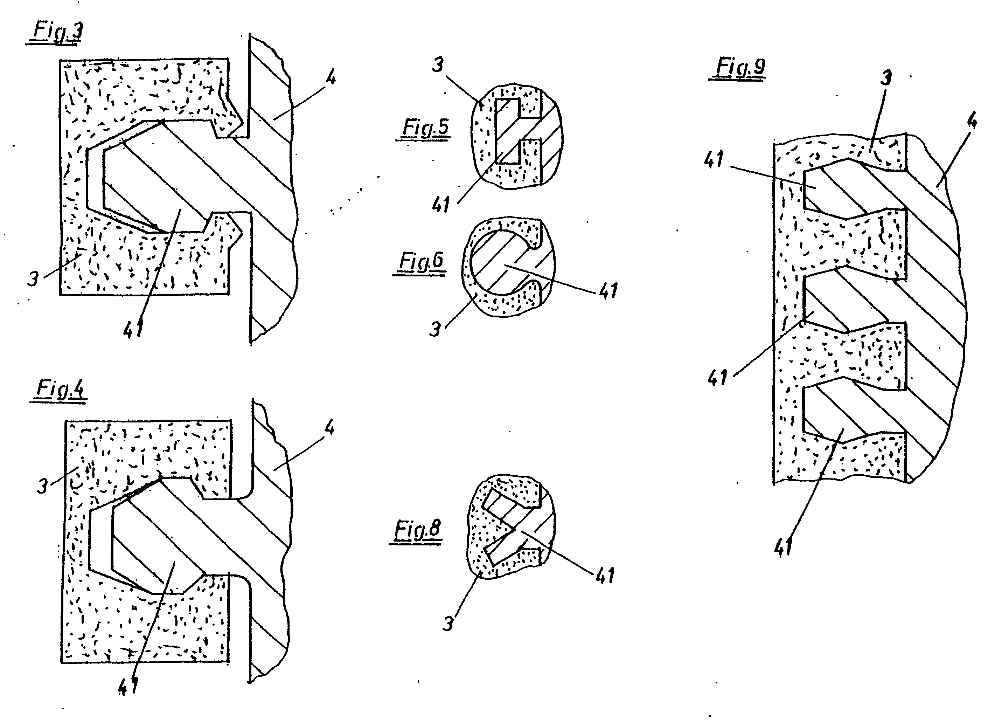

Fig. 3 zeigt die Verbindung im Zustand des Lösens bei nach dem Aushärten noch elastisch bleibender Vergußmasse für den Zwischenhalter 3 und hartem Werkstoff für zumindest das Halteorgan 41 des Bauteils 4.

Fig. 4 zeigt die Verbindung im Zustand des Lösens bei harter Vergußmasse für den Zwischenhalter 3 und einem weichelastischen Werkstoff für zumindest das Halteorgan 41 des Bauteils 4. Bei einer Trennung der den Zwischenhalter 3 tragenden Glasscheibe 1 vom das Halteorgan 41 aufweisenden Bauteil 4 verformt sich das weichelastische Halteorgan 41.

Fig. 5, 6 und 8 zeigen Schnittansichten unterschiedlicher Formgebungen der Halteorgane 41 von Bauteilen 4 mit ihrer Einbettung in durch Umgießen mit Vergußmasse ausgeformten Zwischenhaltern.

Fig. 9 verdeutlicht, daß die Zwischenhalter auch als Leiste angeformt werden können, wobei das Bauteil 4 nebeneinander mehrere rippen- bzw. leistenförmige Wulste als Halteorgane 41 aufweisen kann. Auch mehrere einzelne Halteorgane 41 die kammzinkenartig in Reihen vom Bauteil 4 vorstehen sind möglich.

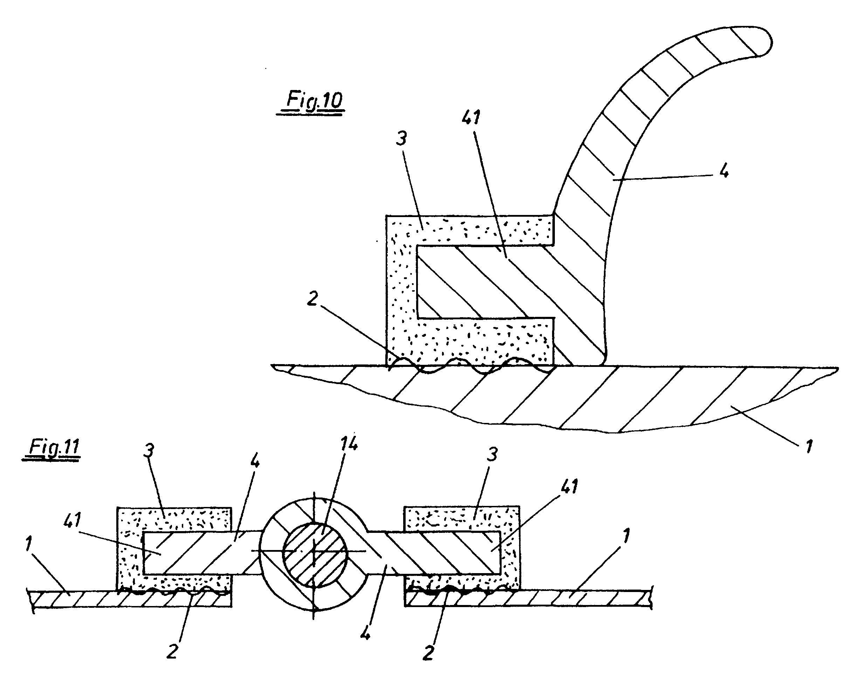

Fig. 10 zeigt in einer schematischen Schnittansicht eine Anwendung der Verbindung entsprechend Fig. 1, bei der das Bauteil 4 aus einem Elastomermaterial mit angeformter Dichtlippe besteht. Gleiche Teile sind mit gleichen Bezugszahlen bezeichnet.

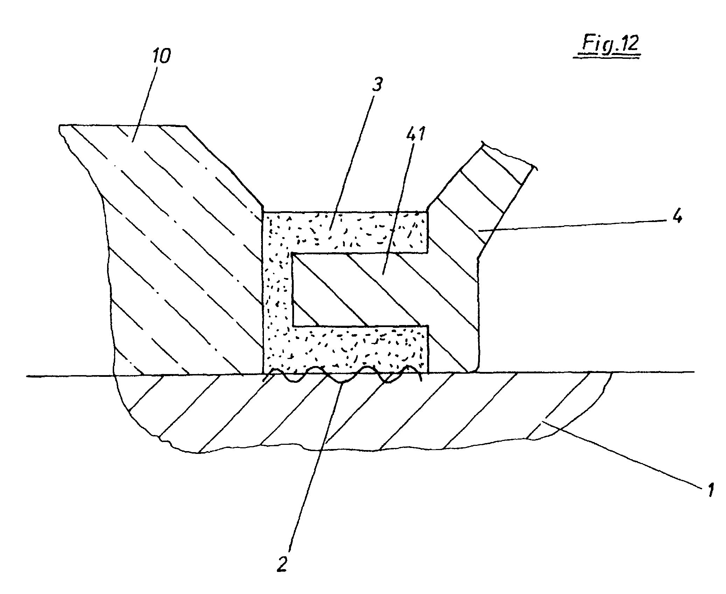

Fig. 11 zeigt in einer schematischen Schnittansicht. ein Anwendungsbeispiel der Verbindung zur Ausbildung eines Gelenkes zwischen zwei Glasscheiben 1. Die Bauteile 4 bilden jeweils einen über den Gelenkzapfen 14 miteinander verbundene Zapfen oder Lappen, deren Enden wiederum Halteorganen 41 ausgebildet sind. Die Halteorgane 41 sind durch Umgießen mit Vergußmasse in die Zwischenhalter 3 eingebettet, wobei jeder Zwischenhalter 3 mittels Kleber 2 wieder mit den Glasscheiben 1 verbunden ist. Die Glasscheiben 1 sind dadurch gelenkig miteinander verbunden.

In Fig. 12 ist ein Verbindungsbereich entsprechend Fig. 1 in schematischer Schnittansicht dargestellt. Das Bauteil 4 mit seinem Tragorgan 41 ist an die Glasscheibe 1 in der vorbestimmten Position gesetzt. Auf die Fläche der Glasscheibe 1 im Verbindungsbereich ist Kleber 2 aufgetragen. Zur Ausformung des Zwischenhalters 3 aus Vergußmasse wird. ein vorgefertigtes Formteil 10 verwendet, das ebenfalls in vorbestimmter Position zum Bauteil 4 auf die Glasscheibe 1 gesetzt wird. Das vorgefertigte Formteil ist, ebenso wie das Bauteil 4 mit seinem Tragorgan 41, an der Ausformung des Zwischenhalters 3 aus Vergußmasse beteiligt, wie es hier dargestellt ist. Das Formteil 10 wird nach dem Aushärten des Zwischenhalters 3 abgenommen und kann wiederverwendet werden. Die Formteile können Klötze oder Leisten sein, so daß sich zum Beispiel mit Leisten und ebenfalls leistenförmigen Bauteilen, Kanäle bilden lassen, die einfach mit Vergußmasse füllbar sind.

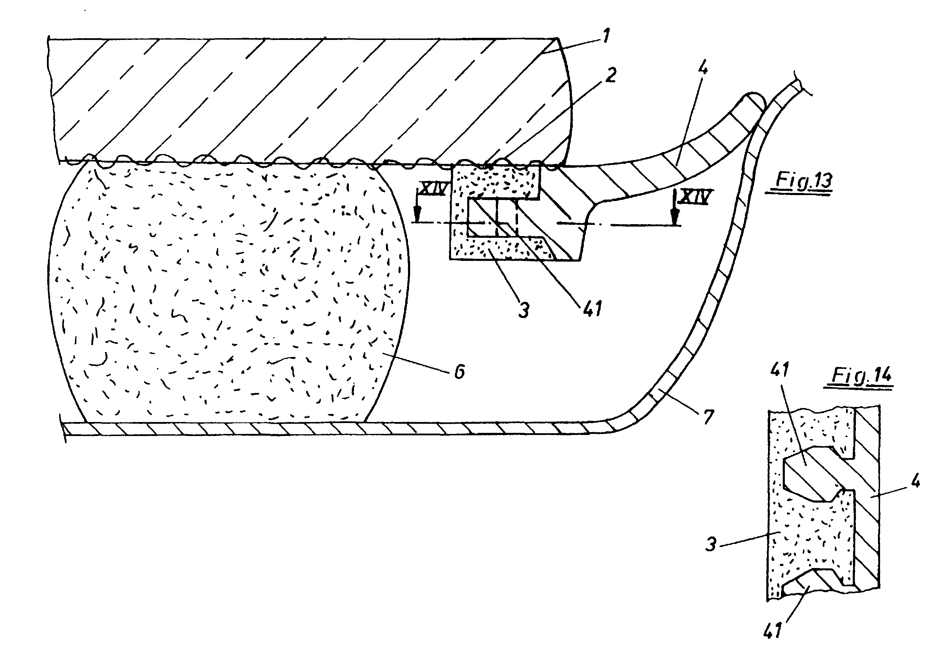

Fig. 13 zeigt eine schematische Schnittansicht einer Verbindung einer Automobil-Glasscheibe 1 mit einem Bauteil 4 mit Dichtlippe entsprechend Fig. 10, wobei die Glasscheibe 1 mit einem Einbaukleber 6 an einem Karosserieflansch 7 befestigt ist. Der im Verbindungsbereich aufgetragene Kleber ist wieder mit 2 bezeichnet, der hier sowohl dem Verkleben des Zwischenhalters 3 aus Vergußmasse mit der Glasscheibe 1 und des Einbauklebers 6 mit der Glasscheibe dient.

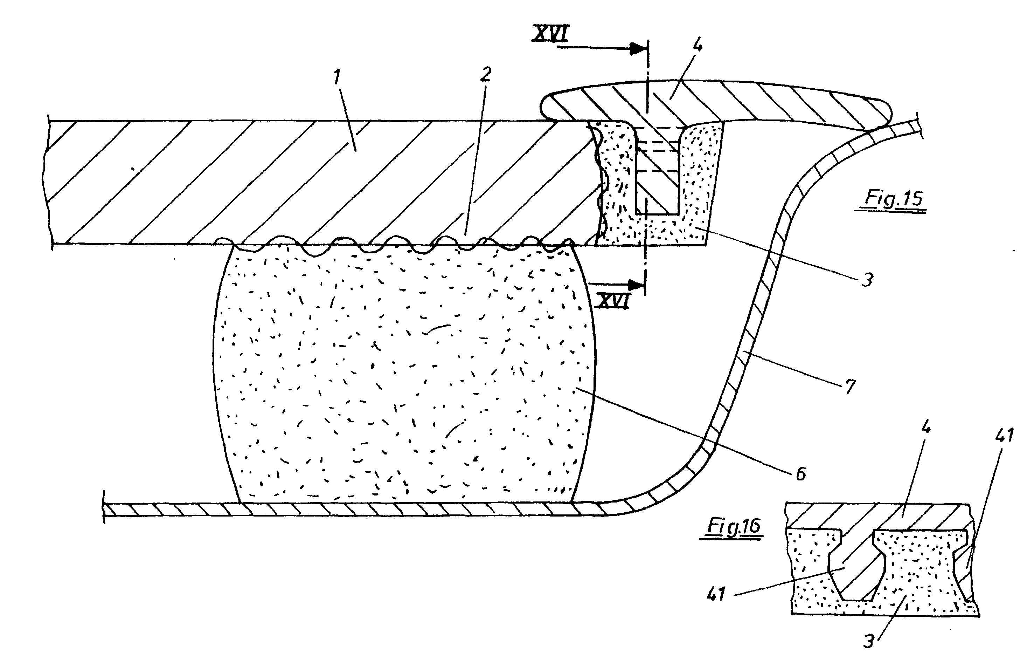

Fig. 14 ist eine Ansicht im Schnitt entlang der. Linie XIV-XIV in Fig. 13 und verdeutlicht, wie die Halteorgane 41 des Bauteils 4 im Zwischenhalter 3 aus Vergußmasse formschlüssig verankert sind, sobald die Aushärtung des Zwischenhalters 3 abgeschlossen ist.

In Fig. 15 ist die Schnittansicht einer Verbindung zwischen einer Auto-Glasscheibe 1 und einem als Blende ausgebildeten. Bauteil 4 dargestellt. Bei diesem Anwendungsbeispiel ist der Zwischenhalter 3 aus Vergußmasse an der Außenkante der Glasscheibe 1 ausgeformt, wobei die Glasscheibe 1 wiederum mit einem Einbaukleber 6 an einem Karosserieflansch 7 befestigt ist.

Fig. 16 ist eine schematische Schnittansicht eines Ausschnitts, entlang der Linie XVI-XVI in Fig. 15. Fig. 16 läßt erkennen, daß sowohl das Bauteil 4, daß hier in Form einer Blende vorliegt als auch der Zwischenhalter 3 aus Vergußmasse in Form einer Leiste vorliegt, die längs der Kante der Glasscheibe 1 verläuft.

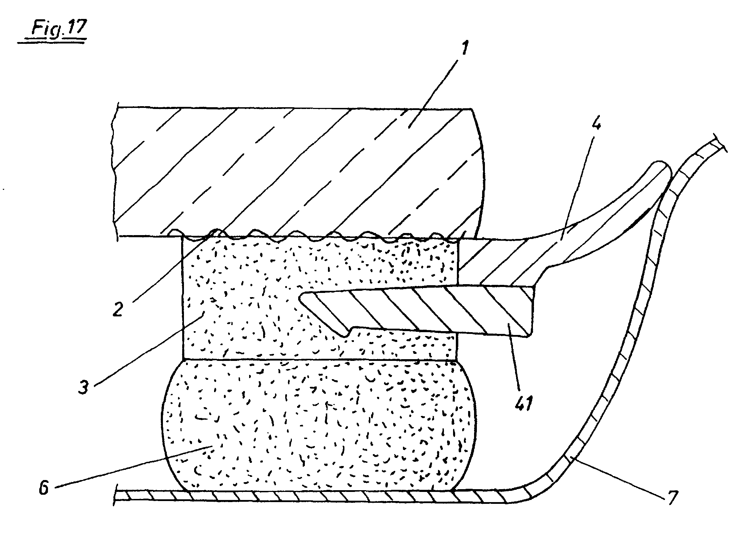

In Fig. 17 ist ein Anwendungsbeispiel der Verbindung dargestellt, bei dem das Bauteil 4 und sein Halteorgan 41 aus unterschiedlichen Werkstoffen bestehen und die Auto-Glasscheibe 1 mittels direkt auf den Zwischenhalter 3 aufgetragenem Einbaukleber 6 mit einem Karosserieflansch 7 verbunden ist. Bei diesem Anwendungsbeispiel ist das Bauteil 4 in Form einer Dichtlippe ausgebildet, die an der Unterseite aus anderem Werkstoff gefertigte, parallel zueinander kammzinkenförmig stehende Halteorgane 41 trägt, welche beim Umgießen mit Vergußmasse zur Herstellung des Zwischenhalters 3 aufgrund ihrer Formgebung im Zwischenhalter 3 verankert sind.

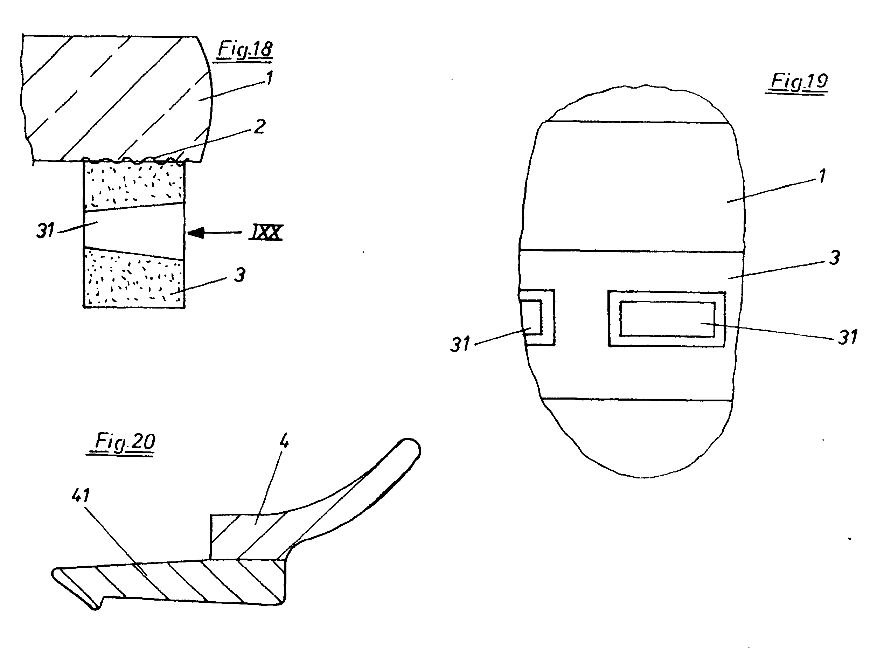

In Fig. 18 ist eine schematische Ansicht des Verbindungsbereiches einer Glasscheibe 1 mit angeformten Zwischenhalter 3 dargestellt, der für eine haltende Wirkverbindung mit Halteorganen 41 eines Bauteils 4 einen Formschluß bewirkende Gestaltungen erhalten hat. Die Gestaltungen sind hier als eingeformte Durchbrechungen 31 ausgebildet. Bei leistenförmiger Ausbildung des angegossenen Zwischenhalters 3 ergibt sich aufgrund einer Vielzahl von nebeneinander befindlichen Durchbrechungen 31 eine lochleistenförmige Gestalt des Zwischenhalters 3, die in Fig. 19 angedeutet ist, welche eine schematische Ansicht des Zwischenhalters 3 in Richtung des Pfeils IXX in Fig. 18 gesehen, zeigt.

Fig. 20 ist eine schematische Seitenansicht eines Bauteils 4 in Form einer Dichtlippe, dessen Halteorgan 41 aus einem anderen Werkstoff besteht.

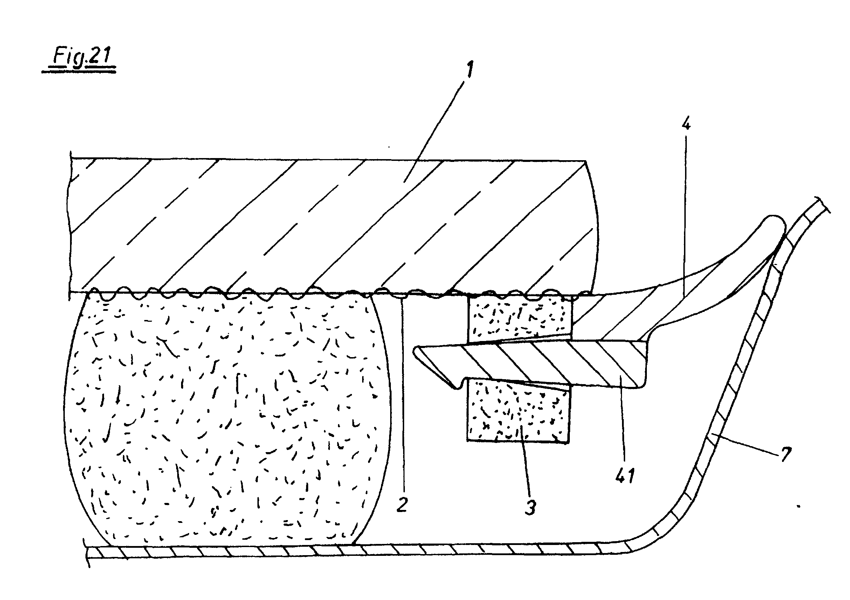

Fig. 21 gibt in einer Schnittansicht ein Anwendungsbeispiel gemäß Fig. 18 - Fig. 20 an, bei dem die Glasscheibe 1, etwa Fig. 13 entsprechend, mit Einbaukleber 6 an einem Karosserieflansch 7 befestigt ist. Gleiche Teile sind mit gleichen Bezugszahlen bezeichnet.

Fig. 22 ist eine Schnittansicht eines Verbindungsbereiches mit einem an die Kante einer Glasscheibe 1 angeformten Zwischenhalter 3, der für eine haltende Wirkverbindung mit Halteorganen eines Bauteils 4 einen Formschluß ermöglichende Gestaltungen erhalten hat, die hier wiederum in Form von Durchbrechungen 31 vorliegen.

Fig. 23 zeigt eine Ansicht des Zwischenhalters in Richtung des Pfeils XXIII in Fig. 22 gesehen.

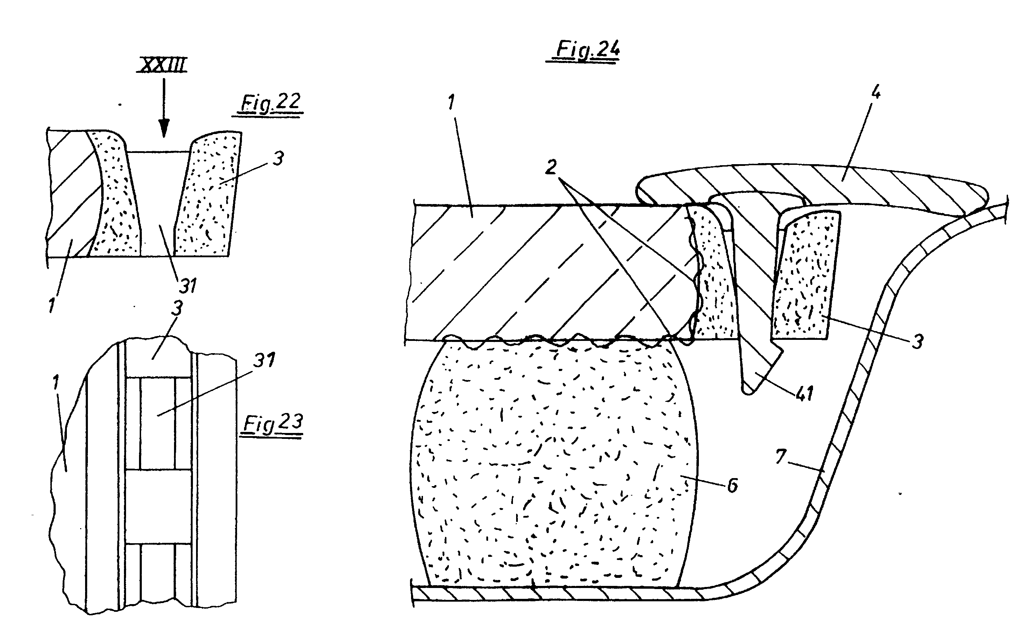

Fig. 24 gibt ein Anwendungsbeispiel entsprechend Fig. 22 bzw. Fig. 23 an, mit einem Bauteil 4 mit Halteorganen 41, daß mit dem angeformten Zwischenhalter 3 formschlüssig verrastet ist, wobei die Glasscheibe 1 mittels Einbaukleber 6 in eine durch einen Karosserieflansch 7 angedeutete Karosserie eingebaut ist.

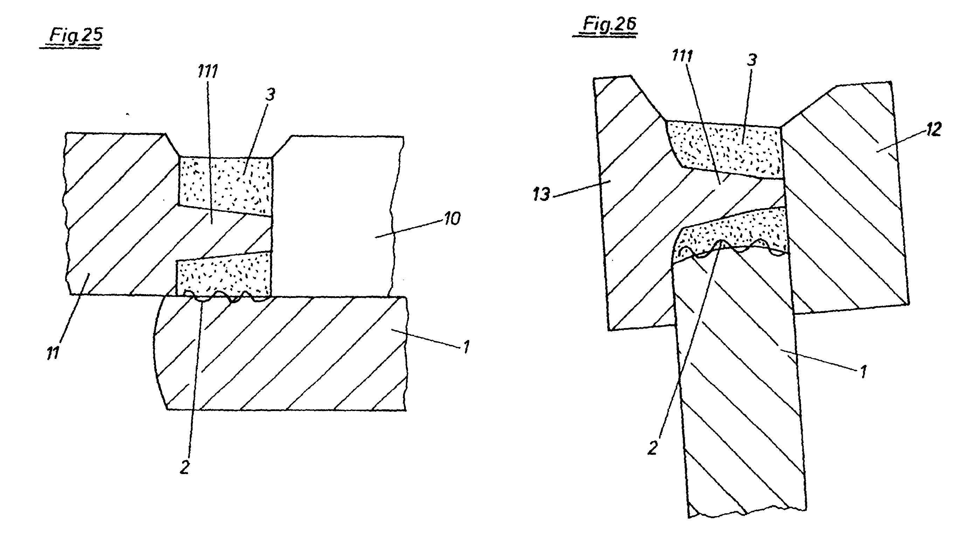

Fig. 25 zeigt eine Ausformung eines Zwischenhalters 3 an einer Glasscheibe 1 mit dem aufgetragenen Kleber 2 entsprechend Fig. 18, wobei die Ausformung des Zwischenhalters mit Hilfe zusätzlicher, abnehmbarer und mehrfach wiederverwendbarer Formteile 10, 11 erfolgt. Das Formteil 11, zum Beispiel eine Leiste mit an einer Seite kammartig vorspringenden Kernzinken 111 formt im Zwischenhalter 3 die Durchbrechungen 31 aus.

Fig. 26 gibt eine Ausformung eines Zwischenhalters 3 an der Kante einer Glasscheibe 1 entsprechend Fig. 22 an, wobei wiederum mit Hilfe zusätzlicher abnehmbarer und wiederverwendbarer Formteile 12, 13 der Zwischenhalter 3 mit seinen Durchbrechungen 31 durch Angießen aushärtender Vergußmasse hergestellt wird.

## Patentansprüche

1. Verfahren zum Herstellen einer Verbindung zwischen einer in eine Fahrzeugkarosserie einsetzbaren. Glasscheibe und einem weiteren, ein Halteorgan aufweisenden Bauteil, wobei auf eine im Verbindungsbereich befindliche Fläche der Glasscheibe ein Kleber aufgetragen wird und wobei mittels aushärtender Vergußmasse, die- in den Kleberauftrag gesetzt wird, wenigstens ein Zwischenhalter an die Glasscheibe geformt wird,
**dadurch gekennzeichnet,**
**daß** der Zwischenhalter mit mindestens -einem Halteorgan des Bauteils in haltende Wirkverbindung bringbar ist.

2. Verfahren nach Anspruch 1, **dadurch gekennzeichnet, daß** das Bauteil (4) an die Glasscheibe (1) in der vorbestimmten Position gesetzt wird und bei der Ausformung des Zwischenhalters (3) aus Vergußmasse an der Formgebung der Vergußmasse beteiligt wird.

3. Verfahren nach Anspruch 2, **dadurch gekennzeichnet, daß** die an der Ausformung der Vergußmasse zum Zwischenhalter (3) beteiligten Flächen des Bauteils (4) bei auftretender Adhäsionsneigung der für Bauteil (4) und Vergußmasse verwendeten Werkstoffe vor dem Anguß der Vergußmasse mit einem Trennmittel beschichtet werden.

4. Verfahren nach einem der Ansprüche 1 - 3, **dadurch gekennzeichnet, daß** zur Ausformung des Zwischenhalters (3) aus Vergußmasse vorgefertigte Formteile (10,11,12,13) verwendet werden.

5. Verfahren nach Anspruch 4, **dadurch gekennzeichnet, daß** die vorgefertigten Formteile (10,11,12,13) nach dem Aushärten der Vergußmasse bzw. des daraus hergestellten Zwischenhalters (3) abgenommen und ggf. wiederverwendet werden.

6. Verfahren nach einem der Ansprüche 1 bis 5, **dadurch gekennzeichnet, daß** für eine haltende Wirkverbindung zwischen dem Bauteil (4) und dem Zwischenhalter (3) Formschluß bewirkende, korrespondierende Gestaltungen verwendet werden.

7. Verfahren nach einem der Ansprüche 1 - 6, **dadurch gekennzeichnet, daß** für die Vergußmasse ein nach der Aushärtung hinsichtlich seiner Härte und Elastizität zu den entsprechenden Eigenschaften des jeweiligen Bauteils (4), bzw. Halteorgan (41) konträrer Werkstoff verwendet wird.

8. Verfahren nach einem der Ansprüche 1 bis 7, **dadurch gekennzeichnet, daß** das Bauteil (4) und. seine Halteorgane (41) getrennt voneinander gefertigt, anschließend zusammengesetzt und danach über den Zwischenhalter (3) mit der Glasscheibe (1) verbunden werden.

9. Verfahren nach einem der Ansprüche 1 - 7, **dadurch gekennzeichnet, daß** das Bauteil (4) und seine Halteorgane (41) gemeinsam in wenigstens einem Arbeitsgang aus unterschiedlichen Werkstoffen gefertigt werden und danach über den Zwischenhalter (3) mit der Glasscheibe (1) verbunden werden.

10. Verfahren nach Anspruch 8, **dadurch gekennzeichnet, daß** für die Halteorgane (41) ein hinsichtlich seiner Härte und Elastizität zu den entsprechenden Eigenschaften des ausgehärteten Zwischenhalters (3) konträrer Werkstoff verwendet wird.

## Claims

1. Method of producing a connection between a pane of glass which can be inserted into a vehicle body and a further component having a holding element, a bonding agent being applied to a surface of the pane of glass, which surface is situated in the connecting region, and at least one intermediate holder being formed on the pane of glass by means of a curing casting compound which is placed into the application of bonding agent, **characterized in that** the intermediate holder can be brought into an enduring effective connection with at least one holding element of the component.

2. Method according to Claim 1, **characterized in that** the component (4) is placed onto the pane of glass (1) in the predetermined position and during the moulding of the intermediate holder (3) from casting compound is involved in the shaping of the casting compound.

3. Method according to Claim 2, **characterized in that** those surfaces of the component (4) which are involved in the moulding of the casting compound to form the intermediate holder (3) are coated with a separating agent prior to the casting of the casting compound when the materials used for the component (4) and casting compound have an adhesion tendency.

4. Method according to one of Claims 1 - 3, **characterized in that** prefabricated shaped parts (10, 11, 12, 13) are used for the moulding of the intermediate holder (3) from casting compound.

5. Method according to Claim 4, **characterized in that** the prefabricated shaped parts (10, 11, 12, 13) are removed after the curing of the casting compound and of the intermediate holder (3) produced therefrom, and, if appropriate, are reused.

6. Method according to one of Claims 1 to 5, **characterized in that** corresponding designs which bring about a form-fitting connection are used for an enduring effective connection between the component (4) and the intermediate holder (3).

7. Method according to one of Claims 1 - 6, **characterized in that** a material which is contrary with respect to its hardness and elasticity after curing to the corresponding properties of the respective component (4) and holding element (41) is used for the casting compound.

8. Method according to one of Claims 1 to 7, **characterized in that** the component (4) and its holding elements (41) are manufactured separately from each other, are subsequently assembled and are then connected to the pane of glass (1) via the intermediate holder (3).

9. Method according to one of Claims 1 - 7, **characterized in that** the component (4) and its holding elements (41) are manufactured together in at least one operation from different materials and are then connected to the pane of glass (1) via the intermediate holder (3).

10. Method according to Claim 8, **characterized in that** a material which is contrary with respect to its hardness and elasticity to the corresponding properties of the cured intermediate holder (3) is used for the holding elements (41).

## Revendications

1. Procédé pour réaliser une liaison entre une vitre à insérer dans une carrosserie de véhicule et un autre composant, comportant un organe de fixation, dans lequel on applique la colle sur une surface de la vitre se trouvant dans la zone de liaison, et dans lequel, au moyen d'une masse de scellement durcissante, qui est placée dans la couche de colle, on forme au moins un organe de fixation intermédiaire sur la vitre, **caractérisé en ce que** l'organe de fixation intermédiaire peut être amené en liaison active de fixation avec au moins un organe de fixation du composant.

2. Procédé selon la revendication 1, **caractérisé en ce que** le composant (4) est placé sur la vitre (1) dans la position prédéterminée, et, pendant le formage de l'organe de fixation intermédiaire (3) fait de la masse de scellement, il participe au formage de la masse de scellement.

3. Procédé selon la revendication 2, **caractérisé en ce que** les surfaces du composant (4), qui participent au formage de la masse de scellement devenant l'organe de fixation intermédiaire (3), sont revêtues d'un agent de démoulage, avant que ne soit coulée la masse de scellement, dans le cas où se manifeste une tendance à l'adhérence des matériaux utilisés pour le composant (4) et la masse de scellement.

4. Procédé selon l'une des revendications 1 à 3, **caractérisé en ce qu'**on utilise des éléments façonnés (10, 11, 12, 13) préfabriqués pour former l'organe de fixation intermédiaire (3) à partir de la masse de scellement.

5. Procédé selon la revendication 4, **caractérisé en ce que** les éléments façonnés (10, 11, 12, 13) préfabriqués sont enlevés après durcissement de la masse de scellement ou de l'organe de fixation intermédiaire (3) fabriqué à partir de celle-ci, et sont éventuellement réutilisés.

6. Procédé selon l'une des revendications 1 à 5, **caractérisé en ce qu'**on utilise, pour une liaison active de fixation entre le composant (4) et l'organe de fixation intermédiaire (3), des formes correspondantes provoquant une liaison par complémentarité de forme.

7. Procédé selon l'une des revendications 1 à 6, **caractérisé en ce qu'**on utilise, pour la masse de scellement, un matériau qui, après durcissement, est contraire en ce qui concerne sa dureté et son élasticité aux propriétés correspondantes du composant (4) respectif, ou de l'organe de fixation (41).

8. Procédé selon l'une des revendications 1 à 7, **caractérisé en ce que** le composant (4) et ses organes de fixation (41) sont fabriqués séparément les uns des autres, puis sont assemblés et reliés ensuite à la vitre (1), à travers l'organe de fixation intermédiaire (3).

9. Procédé selon l'une des revendications 1 à 7, **caractérisé en ce que** le composant (4) et ses organes de fixation (41) sont fabriqués ensemble, en au moins une passe, à partir de matériaux différents, puis sont reliés à la vitre (1), à travers l'organe de fixation intermédiaire (3).

10. Procédé selon la revendication 8, **caractérisé en ce qu'**on utilise pour les organes de fixation (41), un matériau contraire, en ce qui concerne sa dureté et son élasticité, aux propriétés correspondantes de l'organe de fixation intermédiaire (3) durci.
